# EUROPÄISCHE PATENTSCHRIFT

(11) **EP 0 624 939 B1**
(45) Veröffentlichungstag und Bekanntmachung des Hinweises auf die Patenterteilung: **18.06.1997**
(21) Anmeldenummer: 94105766.3
(22) Anmeldetag: 14.04.1994
(51) Int. Cl.: H02B 11/04

(54) **Kontaktanordnung für einschiebbare Leistungsschalter in Schaltanlagen**
Contact arrangement for plug-in type power circuit breakers in switchgears
Dispositif de contact pour interrupteurs de puissance rétractables dans des installations de distribution

(30) Priorität: 10.05.1993 DE 4315491
(43) Veröffentlichungstag der Anmeldung: 17.11.1994
(73) Patentinhaber: AEG Niederspannungstechnik GmbH & Co. KG, 24531 Neumünster (DE)
(72) Erfinder: Berger, Matthias, D-24537 Neumünster (DE); Grahlmann, Klaus, D-24610 Tappenkamp (DE); Grimm, Jörn, D-24253 Prasdorf (DE); Krafft, Henning, D-24534 Neumünster (DE)
(74) Vertreter: Leson, Thomas Johannes Alois, Dipl.-Ing.

(56) Entgegenhaltungen:
- DD-A- 208 266
- FR-A- 2 170 801

## Beschreibung

Die Erfindung betrifft eine Kontaktanordnung für einschiebbare Leistungsschalter in Schaltanlagen der im Oberbegriff des Patentanspruchs 1 angegebenen Art und ein Verfahren zum Auswechseln des Kontaktsystems für eine Kontaktanordnung ohne Abschalten der Schaltanlage.

Durch die EP 0 253 170 B1 ist bereits eine Kontaktanordnung gemäß der angegebenen Gattung bekannt, bei der über einen Antrieb alle elektrischen Verbindungen für die Betriebsstellungen TEST und EIN hergestellt werden und die Fixierung des Leistungsschalters in diesen Betriebsstellungen erreicht wird. Außerdem werden in den Betriebsstellungen AUS und TEST alle stromführenden Teile berührungs- und werkzeugsicher abgedeckt. Zu diesem Zweck sind die Kontaktbrücken in einem Kontaktrahmen angeordnet, der über einen fest im Einschubträger unterhalb des Leistungsschalters angeordneten Spindelantriebes in die verschiedenen Betriebsstellungen AUS, TEST und EIN bewegt wird. Weiterhin weist der Kontaktrahmen eine Abdeckplatte auf, durch die in den verschiedenen Betriebsstellungen zwangsläufig eine berührungs- und werkzeugsichere Abdeckung der stromführenden Anlagenteile gewährleistet ist. Hierbei ist der Leistungsschalter nach dem Herausziehen aus dem Einschubträger in die Wartungsstellung von der Gleitbahn abnehmbar, so daß der Leistungsschalter dann eingehend überprüft und eventuell durch einen neuen Leistungsschalter ersetzt werden kann. Eine gründliche Überprüfung der stromführenden Kontaktbrücken in dem Kontaktrahmen ist nur möglich, wenn der Kontaktrahmen aus dem Einschubträger ausgebaut wird. Zu diesem Zweck muß aber die gesamte Schaltanlage spannungslos geschaltet werden, was in vielen Anwendungsfällen nur für eine sehr kurze Zeit oder überhaupt nicht möglich ist.

Der Erfindung liegt die Aufgabe zugrunde, die Durchführung von Wartungsarbeiten an dem Kontaktrahmen und/oder den Austausch von Kontaktbrücken in dem Kontaktrahmen zu ermöglichen, ohne die gesamte Schaltanlage elektrisch abschalten zu müssen. Diese Aufgabe wird durch die im Patentanspruch 1 gekennzeichneten Merkmale gelöst.

Der besondere Vorteil der Erfindung besteht in dem Austausch des Kontaktsystems einer Einschubtechnik für Leistungsschalter, wobei die Schaltanlage unter Spannung steht. Mit Hilfe der Vorrichtung nach Patentanspruch 1 wird ein sicheres Auswechseln des Kontaktsystems ermöglicht, wobei ein Berühren stromführender Teile der Schaltanlage ausgeschlossen wird.

Weitere vorteilhafte Ausgestaltungen des Erfindungsgegenstandes sind den weiteren Unteransprüchen und der folgenden Beschreibung zu entnehmen.

Die Erfindung wird anhand eines Ausführungsbeispiels im folgenden näher beschrieben. Es zeigen:
- Figur 1: den bekannten Stand der Technik einer Einschubtechnik mit einem Einschubträger, einem Kontaktrahmen und einem Leistungsschalter in der Wartungsstellung,
- Figur 2: entsprechend Figur 1 in der Trennstellung,
- Figur 3: entsprechend Figur 1 in der Prüfstellung,
- Figur 4: entsprechend Figur 1 in der Betriebsstellung,
- Figur 5: die Fixierung des Leistungsschalters im Einschubträger in der Betriebsstellung TEST,
- Figur 6: eine schematische Seitenansicht des Einschubträgers und des Rahmenträgers,
- Figur 7: Einzelheiten des Rahmenträgers aus Figur 6 in Seitenansicht,
- Figur 8: Einzelheiten aus Figur 7 in Draufsicht,
- Figur 9: eine Einzelheit aus Figur 7,
- Figur 10: einen Teil der Vorderansicht auf den uswechselrahmenteil,
- Figur 11: Montagekeile für den Rahmenträger und
- Figur 12: einen Teil des Kontaktrahmens.

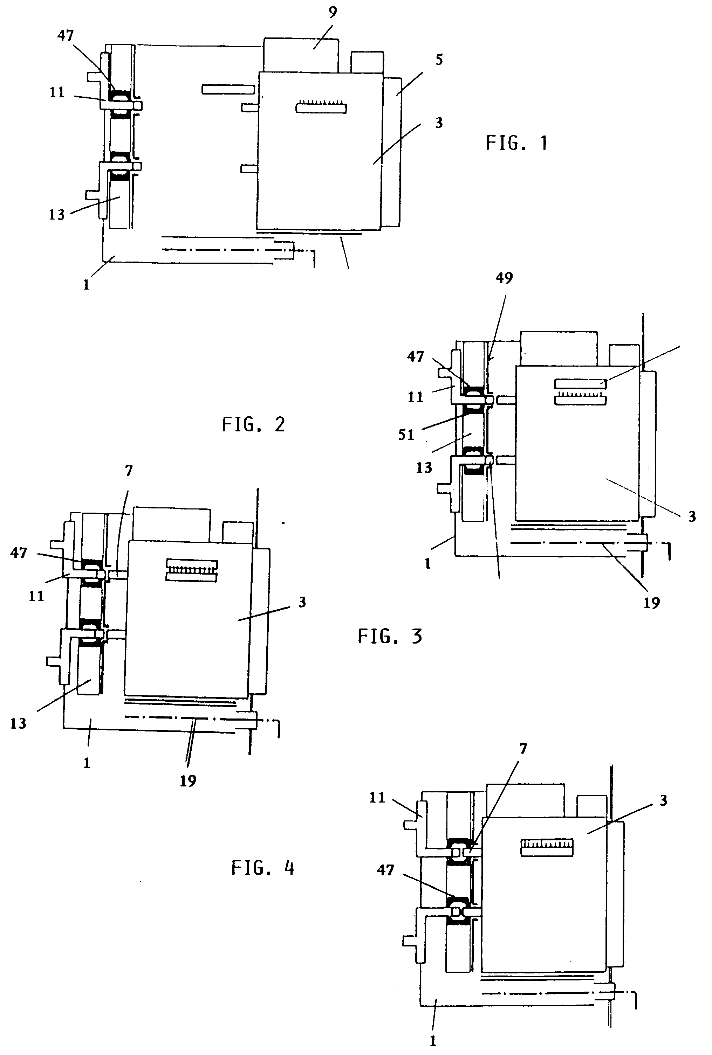

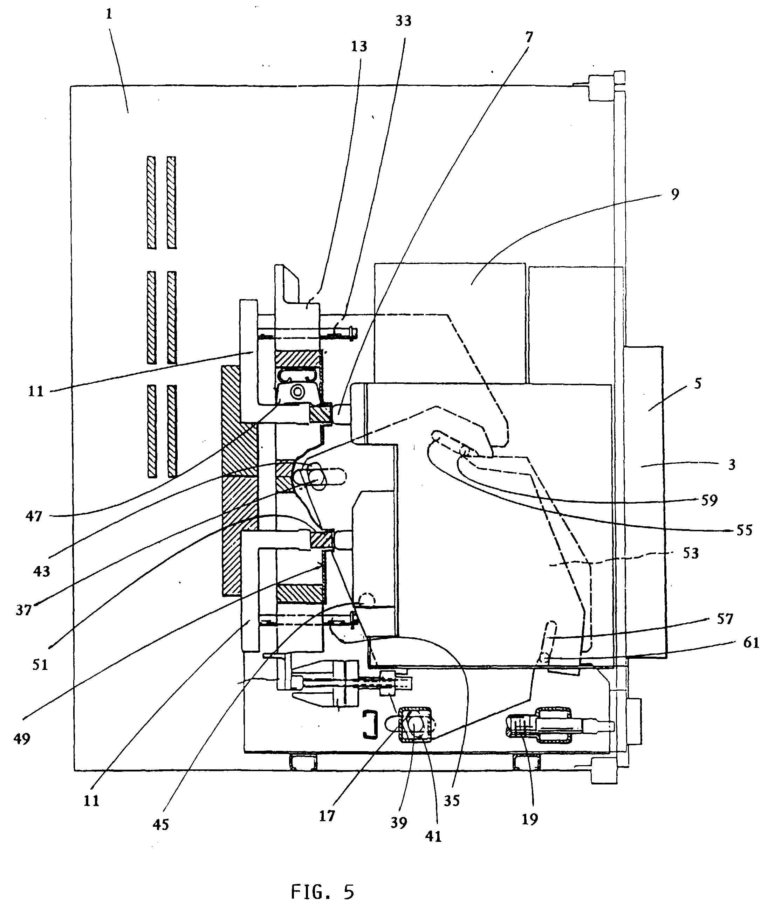

Die Figuren 1 bis 4 zeigen den Stand der Technik einer Kontaktanordnung für einen in eine bestimmte Position in einen Einschubträger 1 einschiebbaren Leistungsschalter 3 in Schaltanlagen. Auf der Schalterfrontseite befindet sich der Antriebstubus 5 und auf der Rückseite sind Anschlußfahnen 7 angeordnet. Mit 9 ist weiterhin eine Löschkammer bezeichnet. Der zusammen mit dem Leistungsschalter 3 eine Einschubtechnik bildende Einschubträger 1 weist ebenfalls Anschlußfahnen 11 auf, die mit nicht dargestellten Sammelschienen verbunden sind. Zur elektrischen Verbindung der Anschlußfahnen 7 und 11 ist ein Kontaktrahmen 13 vorgesehen, der über einen Antriebshebel 15 mit einer Spindelmutter 17 verschiebbar ist. Die Spindel 19 wird in bekannter Weise von der Frontseite der Schaltanlage über eine Handkurbel betätigt. Die Verschiebung des Kontaktrahmens 13 wird gemäß den Figuren 1 bis 4 über Schlitze 21, 23 im Einschubträger 1 und jeweils je zwei Zapfen 25, 27, 29, 31 im Kontaktrahmen 13 oder gemäß Figur 5 über Führungsstifte 33, 35 an dem Einschubträger 1 bewerkstelligt. Der Antriebshebel 15 ist mittels Zapfen 37, 39 in dem Kontaktrahmen 13 und Spindelmutter 17 und Langlöcher 41, 43 im Antriebshebel 15 über einen festen Zapfen 45 im Einschubträger 1 schwenkbar.

Der Kontaktrahmen 13 weist federnde Lamellenkontakte als Kontaktbrücken 47 auf, die in den Betriebsstellungen WARTUNG und AUS auf den festen Anschlußfahnen 11 ruhen. Durch Betätigen der Spindel 19 bewegt sich der Kontaktrahmen 13 mit den Kontaktbrücken 47 aus der Betriebsstellung AUS gemäß Figur 2 über die Betriebsstellung TEST gemäß Figur 3 in die Betriebsstellung EIN gemäß Figur 4, wobei die Kontaktbrücken 47 die Anschlußfahnen 7 und 11 miteinander verbinden. Der Kontaktrahmen 13 weist noch vorne eine Abdeckplatte 49 auf, die zur elektrischen Isolierung der stromführenden Anlagenteile dient. Die am Einschubträger 1 befestigten Anschlußfahnen 11 sind an den in den Einschubträger 1 hineinragenden Enden stirnseitig noch mit einem elektrischen Isolierteil 51 versehen. Hierdurch wird eine berührungs- und werkzeugsichere Abdeckung der Anschlußfahnen 11 in den Betriebsstellungen AUS und TEST erzielt.

Die Figur 5 zeigt den Kontaktrahmen 13 in der Betriebsstellung TEST, wobei der Antriebshebel gemäß Figur 1 durch eine Antriebsplatte 53 ersetzt ist. Diese Antriebsplatte 53 weist Einfahrschlitze 55, 57 für an dem Leistungsschalter 3 angeordnete Zentrierzapfen 59, 61 auf. Hierdurch wird der Leistungsschalter in der eingeschobenen Position in den Betriebsstellungen TEST und EIN des Kontaktrahmens 13 sicher fixiert.

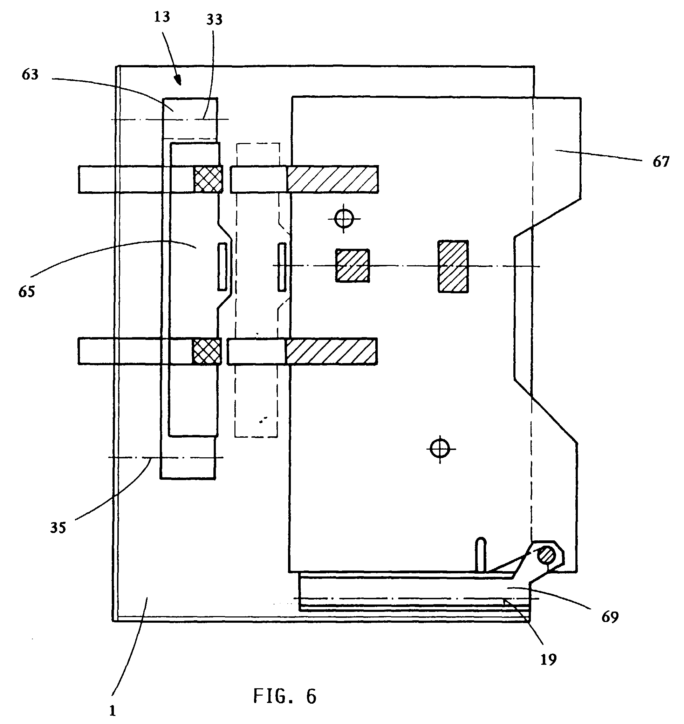

Die Figuren 6 bis 11 zeigen die erfindungsgemäße Kontaktanordnung, wobei die Durchführung von Wartungsarbeiten an dem Kontaktrahmen und/oder der Austausch von Kontaktelementen in dem Kontaktrahmen ermöglicht wird, ohne daß die gesamte Schaltanlage wie bisher üblich abgeschaltet werden muß. Dieses wird dadurch ermöglicht, daß der Kontaktrahmen 13 aus einem durch den Spindelantrieb in dem Einschubträger 1 in die Betriebsstellungen AUS, TEST und EIN verschiebbaren Kontaktrahmenteil 63 und einem mit diesem lösbar verbundenen Auswechselrahmenteil 65, in dem die Kontaktbrücken 47 angeordnet sind, besteht. Zum Auswechseln des Auswechselrahmenteiles 65 wird anstelle des Leistungsschalters 3 ein Rahmenträger 67 aus der Wartungs- in die Trennstellung in den Einschubträger 1 hineingeschoben. Danach wird der Kontaktrahmen 13 über die Spindelwelle 19 und die Antriebsplatte 53 in die Betriebsstellung EIN gefahren, wobei die Antriebsplatte 53 über die Einfahrschlitze 55, 57 den Rahmenträger 67 über an diesem angeordnete Zentrierzapfen in dem Einschubträger 1 verriegelt. Der in dem Einschubträger 1 auf Gleitschienen eingefahrene und verriegelte Rahmenträger 67 wird mit dem Auswechselrahmenteil 65 dadurch fest gekuppelt, daß der Rahmenträger 67 an beiden Längsseiten gemäß Figur 8 je einen verschwenkbaren, stangenförmigen Kupplungshebel 71, 72 aufweist. Diese Kupplungshebel 71, 72 weisen an ihren Enden 76, 78 abgewinkelte Griffe 73, 74 und an ihren anderen Enden 75, 77 aus dem Rahmenträger 67 herausragende, einseitig angeordnete Verriegelungslappen 79, 81 auf, welche in Kupplungsschlitze 83, 85 in dem Auswechselrahmenteil 65 zur formschlüssigen Mitnahme in Schieberichtung einschwenkbar sind.

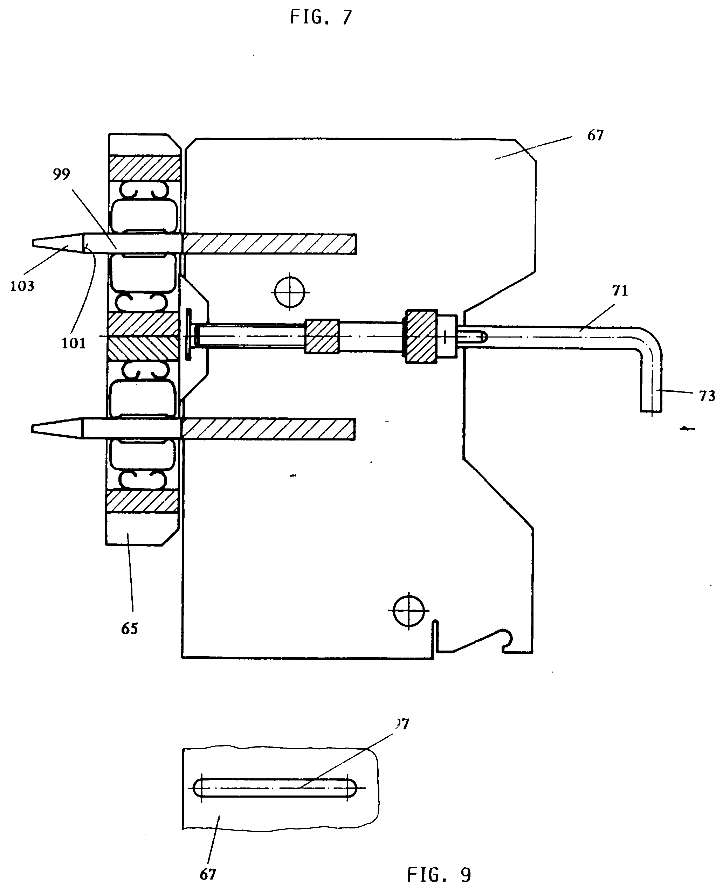

Die Kupplungshebel 71, 72 sind in einer in Einschubrichtung des Rahmenträgers 67 bewegbaren Traverse 87 schwenkbar und in Längsrichtung fixiert gelagert. Diese bewegbare Traverse 87 weist eine Spindelmutter 89 für eine Spindelwelle 91 eines Spindelantriebes 93 auf, wobei die Spindelwelle 91 andererseits in einer festen Traverse 88 in dem Rahmenträger 67 drehbar gelagert ist. Nach dem Kupplungsvorgang des Rahmenträgers 67 mit dem Auswechselrahmenteil 65 wird die feste Verbindung zwischen diesem Auswechselrahmenteil 65 und dem Kontaktrahmenteil 63 derart gelöst, daß das Auswechselrahmenteil 65 durch Drehen der Spindelwelle 91 dann an den Rahmenträger 67 gezogen wird. Zu diesem Zweck weist die Spindelwelle 91 an ihrem freien Ende ein Formstück 95 zur formschlüssigen Aufnahme einer Handkurbel oder eines sonstigen Werkzeuges auf. Ein verkantungssicheres Verschieben der bewegbaren Traverse 87 wird über an diese angeordnete Führungsstifte erzielt, welche in Führungsschlitze 97 des Rahmenträgers 67 gleitbar gelagert sind, siehe Figur 9. Nach dem Trennen des Auswechselrahmenteils 65 von dem Kontaktrahmenteil 63 wird letzteres über die Spindelwelle 19 aus der Betriebsstellung EIN über die Betriebsstellung TEST in die Betriebsstellung AUS gefahren, wodurch die Antriebsplatte 53 zum Freigeben des Rahmenträgers 67 im Gegenuhrzeigersinn um die Achse 45 verschwenkt wird. Der nun freigegebene Rahmenträger 67 wird daraufhin aus dem Einschubträger 1 mittels der Gleitbahnen in die Wartungsstellung herausgezogen. Zwecks Überprüfung der Kontaktbrücken 47 in dem wechselrahmenteil 65 kann der Rahmenträger 67 zusammen mit dem Auswechselrahmenteil 65 von den Tragorganen abgenommen werden. Eine bessere Kontrolle der Kontaktbrücken 47 hinsichtlich Verschleiß oder Verschmutzung wird dadurch erreicht, daß das wechselrahmenteil 65 über die Spindelwelle 91 in dem Rahmenträger 67 mit Hilfe einer Handkurbel von dem Rahmenträger 67 weggefahren wird. Wird bei dieser Überprüfung festgestellt, daß die Kontaktbrücken 47 nicht mehr funktionstüchtig zu sein scheinen und daher ausgetauscht werden müssen, werden die Kupplungshebel 71, 72 zum Entkuppeln derart verschwenkt, daß die Verriegelungslappen 79, 81 an den Kupplungshebeln 71, 72 aus den Kupplungsschlitzen 83, 85 herausgedreht werden. Dann wird ein neues Auswechselrahmenteil 65 mit dem Rahmenträger 67 verbunden, wobei das Einschieben und Verbinden des Auswechselrahmenteiles 65 mit dem Kontaktrahmenteil 63 in umgekehrter Reihenfolge - wie oben für den Ausbau beschrieben - erfolgt.

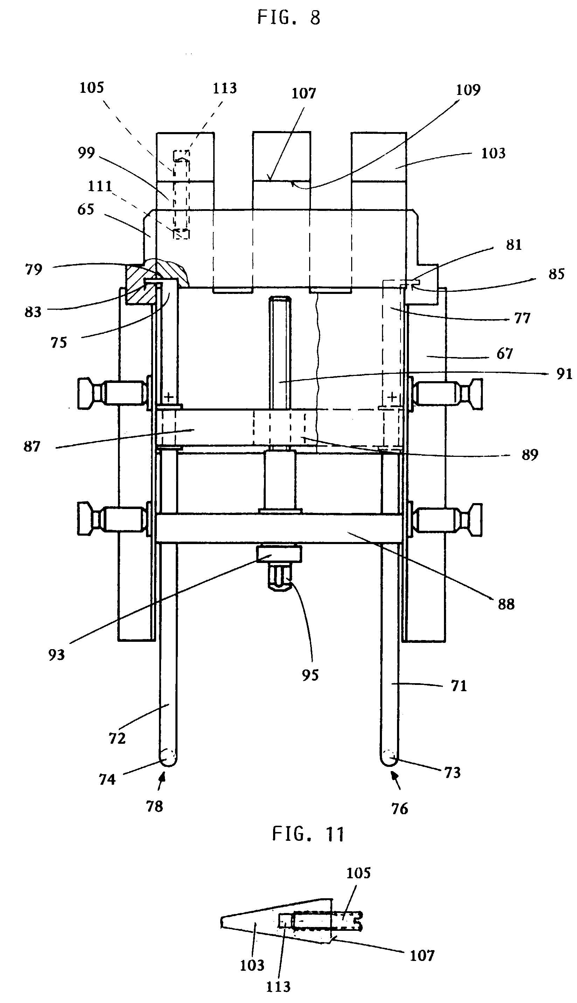

Der Rahmenträger 67 weist übrigens vorstehende, im Querschnitt rechteckförmig ausgebildete Trennstege 99 auf, auf welche die einander gegenüberliegenden, abgefederten Kontaktbrücken 47 nach der Trennung von dem Kontaktrahmenteil 63 aufliegen. Das Aufschieben der Kontaktbrücken 47 auf die Trennstege 99 wird dadurch vereinfacht, daß die Trennstege 99 an ihren freien Enden 101 Montagekeile 103 aufweisen. Diese Montagekeile sind gemäß den Figuren 8 und 11 mittels Schraubenbolzen 105 mit den Trennstegen 99 fest verbindbar. Die einander zugewandten Stirnflächen 107, 109 weisen zu diesem Zweck Gewindebohrungen 111, 113 auf, in welche die Schraubenbolzen 105 einschraubbar sind. In vorteilhafter Ausgestaltung bestehen die Montagekeile 103 und/oder die Trennstege 99 aus einem Kunststoff, z. B. aus einem Polyester. Die Montagekeile 103 erleichtern also mit einfachsten Mitteln ein sicheres Einführen der Trennstege 99 in den Zwischenraum zwischen den Kontaktbrücken 47, welche bei einem eingesetzten Leistungsschalter 3 auf den Anschlußfahnen 7 und/oder 11 oder auf den elektrischen Isolierteilen 51 aufliegen.

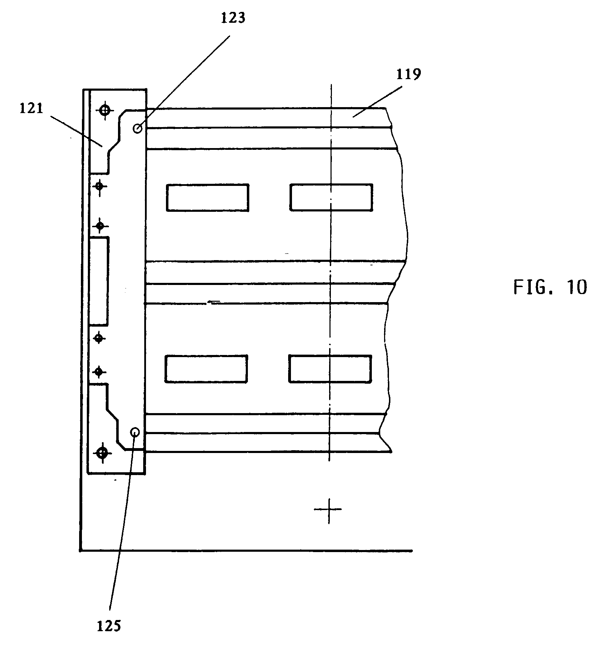

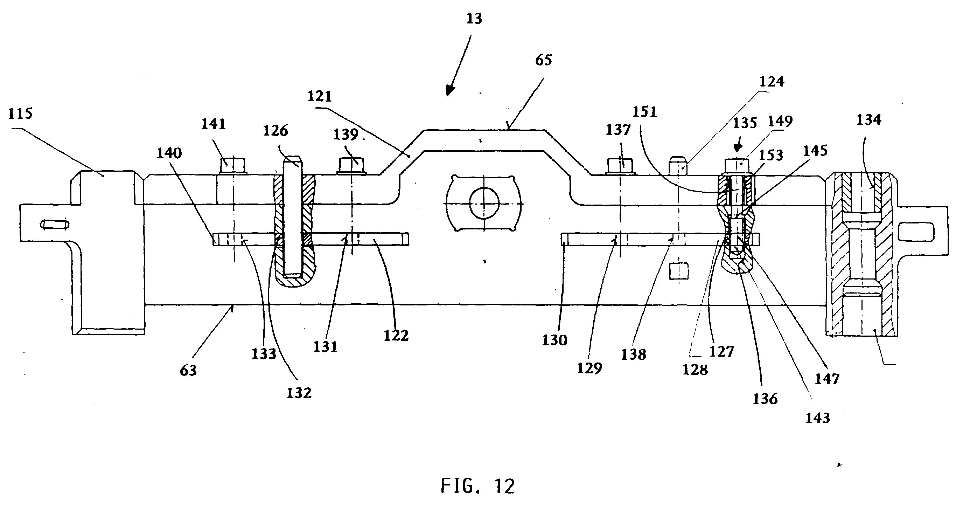

Die Kontaktrahmenteile 63 bestehen aus zwei Traversen 115, welche mit Lagerbuchsen 134 auf den zwei Führungsbolzen 33, 35 in dem Einschubträger 1 verkantungssicher und parallel zueinander verschiebbar gelagert sind. Das Verschieben der Traversen 115 erfolgt über die Antriebsplatte 53, von denen in der Figur 5 nur eine dargestellt ist, welche über die Spindelwelle 19 formschlüssig antreibbar ist. Das Auswechselrahmenteil 65 besteht aus einem Kontaktbrückenträger 119, der an beiden Querseiten je einen mittels Spannstifte 123, 125 befestigte Traverse 121 aufweist. Diese Traverse 121, von der in der Figur 10 nur eine dargestellt ist, sind mittels Schraubenverbindungen mit den verschiebbaren Traversen 115 des Kontaktrahmenteiles 63 lösbar verbunden, wobei die Traversen 121 und 115 mittels Zentrierstifte 124, 126 zueinander zentriebar sind, siehe Figur 12. Zu diesem Zweck weisen die Traversen 115, 121 entsprechende Paßbohrungen für die Zentrierstifte 124, 126 auf. Die in die Gewindebohrungen 127, 129, 131, 133 der Traverse 115 des Kontaktrahmenteiles 63 einschraubbaren Schrauben 135, 137, 139, 141 sind an den freien Enden 143 ihrer Schraubenbolzen 145 mit einem Gewindeteil 147 versehen, welche zwischen dem Schraubenkopf 149 und dem Gewindeteil 147 einen schraubenlosen Bolzenteil 151 mit einem gegenüber dem Gewindeteil 147 verringerten Außendurchmesser aufweisen. Hierdurch wird ermöglicht, daß die Schraubenbolzen 145 nach Durchschrauben ihrer Gewindeteile 147 von Gewindebohrungen 153 in den Traversen 121 des Auswechselrahmenteiles 65 unverlierbar den Traversen 121 des Auswechselrahmenteiles 65 verschiebbar gelagert sind. Die Gewindebohrungen 127, 129, 131 und 133 und die Führungen 132, 138 in dem Kontaktrahmenteil 63 befinden sich in Metallplatten 122, 128, welche in seitliche Ausnehmungen 130, 140 eingeschoben sind.

Das Überprüfen und das Austauschen fehlerhafter Kontaktbrücken 47 ist ohne Abschalten der Schaltanlage möglich, wozu folgende Verfahrensschritte erforderlich sind:
- Verfahren des Kontaktrahmens 13 in die Betriebsstellung AUS, wobei der Leistungsschalter 3 aus seiner fixierten Stellung in dem Einschubträger 1 entriegelt wird.
- Herausziehen des Leistungsschalters 3 aus dem Einschubträger 1 in die Wartungsstellung mittels Gleitbahnen und Herausnehmen des Leistungsschalters 3.
- Einsetzen und Einschieben des Rahmenträgers 67 in die Trennstellung (Betriebsstellung AUS des Kontaktrahmenteiles 13).
- Bewegen des Kontaktrahmens 13 über die Spindelwelle 19 in dem Einschubträger 1 mit Hilfe einer Handkurbel von der Trenn- in die Betriebsstellung EIN.
- Verbinden des Rahmenträgers 67 mit dem Auswechselrahmenteil 65 mittels der Kupplungsriegel 71, 72.
- Lösen der Verbindung des Auswechselrahmenteiles 65 von dem Kontaktrahmenteil 63 durch Lösen der unverlierbaren Schrauben 135, 137, 139, 141.
- Anziehen des Auswechselrahmenteiles 65 an den Rahmenträger 67 über die Spindel 91 in dem Rahmenträger 67 mit Hilfe einer Handkurbel.
- Verfahren des Kontaktrahmenteiles 63 in die Betriebsstellung AUS, wobei der Rahmenträger 67 entriegelt wird.
- Herausziehn des Rahmenträgers 67 mit dem Auswechselrahmenteil 65 in die Wartungsstellung und Abnahme derselben von den Tragorganen.

Das Überprüfen der Kontaktbrücken 47 wird dadurch noch erleichtert, daß das Auswechselrahmenteil 65 über die Spindelwelle 91 in dem Rahmenträger 67 mit Hilfe der Handkurbel verfahren wird.

Das Einsetzen eines neuen Auswechselrahmenteiles 65 und das Verbinden dieses Auswechselrahmenteiles 65 mit dem Kontaktrahmenteil 63 erfolgt in der umgekehrten Reihenfolge wie oben die Verfahrensschritte zum Ausbauen beschrieben wurden.

## Patentansprüche

1. Kontaktanordnung für einschiebbare Leistungsschalter (3) in Schaltanlagen, wobei im festen Anlagenteil und am Leistungsschalter (3) Anschlußfahnen (7, 11) vorgesehen sind, der Leistungsschalter (3) in eine feste Stellung in einen Einschubträger (1) eingeschoben wird und zur elektrisch leitenden Verbindung der festen mit den am Leistungsschalter (3) angeordneten Anschlußfahnen (7, 11) Kontaktbrücken (47) vorgesehen sind, wobei die Kontaktbrücken (47) in einem Kontaktrahmen (13) angeordnet sind, welcher über einen fest in dem Einschubträger (1) unterhalb des Leistungsschalters (3) angeordneten Spindelantrieb (19) in die verschiedenen Betriebsstellungen AUS, TEST und EIN bewegt wird und wobei der Leistungsschalter (3) in den Betriebsstellungen TEST und EIN auf seinem Platz in dem Einschubträger (1) zwangsläufig fixiert und in der Betriebsstellung AUS aus dem Einschubträger (1) herauszieh- und von diesem abnehmbar ist, **dadurch gekennzeichnet**, daß der Kontaktrahmen (13) aus einem verschiebbaren Kontaktrahmenteil (63) und einem mit diesem lösbar verbundenen Auswechselrahmenteil (65), in dem die Kontaktbrücken (47) angeordnet sind, besteht, wobei zur Trennung des Auswechselrahmenteiles (65) von dem Kontaktrahmenteil (63) ohne Abschalten der Spannung in dem Einschubträger (1) anstelle des Leistungsschalters (3) ein Rahmenträger (67) in den Einschubträger (1) einschieb- und in der eingeschobenen Stellung fixierbar ist, der mit dem Auswechselrahmenteil (65) fest kuppelbar und nach dessen Lösen von dem Kontaktrahmenteil (63) zusammen mit diesem aus dem Einschubträger (1) herauszieh- und von diesem abnehmbar ist.

2. Kontaktanordnung nach Anspruch 1, **dadurch gekennzeichnet**, daß der in den Einschubträger (1) auf Gleitbahnen einfahrbare Rahmenträger (67) an beiden Längsseiten je einen verschwenkbaren, stangenförmigen Kupplungshebel (71, 72) aufweist, welche an ihren freien Enden (75, 77) aus dem Rahmenträger (67) herausragende, einseitig angeordnete Verriegelungslappen (79, 81) aufweisen, welche in Kupplungsschlitze (83, 85) in dem Auswechselrahmenteil (65) zur formschlüssigen Mitnahme in Schieberichtung einschwenkbar sind.

3. Kontaktanordnung nach Anspruch 2, **dadurch gekennzeichnet**, daß die Kupplungshebel (71, 72) in einer in Einschubrichtung bewegbaren Traverse (87) schwenkbar und in Längsrichtung fixiert gelagert sind.

4. Kontaktanordnung nach Anspruch 3, **dadurch gekennzeichnet**, daß die bewegbare Traverse (87) eine Spindelmutter (89) für eine Spindelwelle (91) eines Spindelantriebes aufweist, und daß die Spindelwelle (91) in einer festen Traverse (88) in dem Rahmenträger (67) drehbar gelagert ist.

5. Kontaktanordnung nach Anspruch 4, **dadurch gekennzeichnet**, daß die Spindelwelle (91) an ihrem freien Ende (93) ein Formstück (95) zur formschlüssigen Aufnahme einer Handkurbel oder eines sonstigen Handwerkzeuges aufweist.

6. Kontaktanordnung nach einem der vorhergehenden Ansprüche, **dadurch gekennzeichnet**, daß der Rahmenträger (67) Führungsschlitze (97) für Führungsstifte an der bewegbaren Traverse (87) aufweist.

7. Kontaktanordnung nach einem der vorhergehenden Ansprüche, **dadurch gekennzeichnet**, daß der Rahmenträger (67) vorstehende, im Querschnitt rechteckförmig ausgebildete Trennstege (99) aufweist, auf welche die einander gegenüberliegenden, abgefederten Kontaktbrücken (47) aufliegen.

8. Kontaktanordnung nach Anspruch 7, **dadurch gekennzeichnet**, daß die Trennstege (99) an ihren freien Enden (101) Montagekeile (103) aufweisen, welche das Einführen der Trennstege (99) in den Zwischenraum zwischen den sich gegenüberliegenden Kontaktbrücken (47) erleichtern.

9. Kontaktanordnung nach Anspruch 8, **dadurch gekennzeichnet**, daß die Montagekeile (103) mittels Schraubenbolzen (105) mit den Trennstegen (99) fest verbindbar sind.

10. Kontaktanordnung nach Anspruch 9, **dadurch gekennzeichnet**, daß die einander zugewandten Stirnflächen (107, 109) der Trennstege (99) und der Montagekeile (103) zueinander ausgerichtete Gewindebohrungen (111, 113) aufweisen, in welche die Gewindebolzen (105) einschraubbar sind.

11. Kontaktanordnung nach einem der vorhergehenden Ansprüche, **dadurch gekennzeichnet**, daß die Montagekeile (103) und/oder die Trennstege (99) aus einem Kunststoff, z. B. aus einem Polyester bestehen.

12. Kontaktanordnung nach einem der vorhergehenden Ansprüche, **dadurch gekennzeichnet**, daß das Kontaktrahmenteil (63) aus zwei Traversen (115) besteht, welche auf zwei Führungsbolzen (33, 35) in dem Einschubträger (1) verkantungssicher und gemeinsam parallel zueinander über durch die Spindelwelle (19) beaufschlagbare Antriebshebel (15) verschiebbar gelagert sind.

13. Kontaktanordnung nach Anspruch 12, **dadurch gekennzeichnet**, daß der Antriebshebel (15) als Platte (53) ausgebildet ist, die auf dem festen Drehzapfen (45) gelagert ist und über Einfahrschlitze (55, 57) und Zapfen (59, 61) gleichzeitig mit dem Verschieben des Kontaktrahmens (13) den Leistungsschalter (3) in den Betriebsstellungen TEST und EIN auf seinem Platz im Einschubträger (1) fixiert.

14. Kontaktanordnung nach einem der vorhergehenden Ansprüche, **dadurch gekennzeichnet**, daß das Auswechselrahmenteil (65) aus einem Kontaktbrückenträger (119) besteht, der an beiden Querseiten je eine mittels Spannstifte (123, 125) befestigte Traverse (121) aufweist, und daß die Traversen (121) mittels lösbarer Schraubenverbindungen mit den verschiebbaren Traversen (115) des Kontaktrahmenteiles (63) verbunden sind, wobei die Traversen (121) mittels Zentrierstifte (124, 126) zueinander zentrierbar sind.

15. Kontaktanordnung nach einem der vorhergehenden Ansprüche, **dadurch gekennzeichnet**, daß die Gewindebohrungen (127, 129, 131, 133) der Traversen (115) des Kontaktrahmenteiles (63) einschraubbare Schrauben (135, 137, 139, 141) an den freien Enden (143) ihrer Schraubenbolzen (145) mit einem Gewindeteil (147) versehen sind und daß die Schraubenbolzen (145) zwischen dem Schraubenkopf (149) und dem Gewindeteil (147) einen schraubenlosen Bolzenteil (151) mit einem gegenüber dem Gewindeteil (147) verringerten Außendurchmesser derart aufweisen, daß die Schraubenbolzen (145) nach Durchschrauben ihrer Gewindeteile (147) von Gewindebohrungen (153) in den Traversen (121) unverlierbar in den Traversen (121) des Auswechselrahmenteiles (65) verschiebbar gelagert sind.

16. Verfahren zum Auswechseln des Kontaktsystems für eine Kontaktanordnung ohne Abschalten der Schaltanlage nach einem der vorhergehenden Ansprüche, **gekennzeichnet durch** folgende Verfahrensschritte:
- Verfahren des Kontaktrahmens (13) in die Betriebsstellung AUS, wobei der Leistungsschalter (3) in seiner fixierten Stellung in dem Einschubträger (1) entriegelt wird
- Herausziehen des Leistungsschalters (3) aus dem Einschubträger (1) in die Wartungsstellung mittels Gleitbahnen und Herausnehmen des Leistungsschalter (3)
- Einsetzen und Einschieben des Rahmenträgers (67) in die Trennstellung (Betriebsstellung AUS) des Kontaktrahmens (13)
- Bewegen des Kontaktrahmens (13) über die Spindelwelle (19) in dem Einschubträger (1) mit Hilfe einer Handkurbel von der Trenn- in die Betriebsstellung EIN
- Verbinden des Rahmenträgers (67) mit dem Auswechselrahmenteil (65) mittels der Kupplungsriegel (71, 72)
- Lösen der Verbindung des Auswechselrahmenteiles (65) von dem Kontaktrahmenteil (63) durch Lösen der unverlierbaren Schrauben (135, 137, 139, 141)
- Aufziehen des Auswechselrahmenteiles (65) auf den Rahmenträger (67) über die Spindel (91) in dem Rahmenträger (67) mit Hilfe einer Handkurbel
- Verfahren des Kontaktrahmenteiles (63) in die Betriebsstellung AUS, wobei der Rahmenträger (67) entriegelt wird und
- Herausziehen des Rahmenträger (67) mit dem Auswechselrahmenteil (65) in die Wartungsstellung und Abnahme derselben von den Gleitbahnen.

17. Verfahren nach Anspruch 16, **dadurch gekennzeichnet**, daß das Auswechselrahmenteil (65) über die Spindelwelle (91) in dem Rahmenträger (67) zwecks Kontrolle der Kontaktbrücken (47) mittels einer Handkurbel verfahren wird.

## Claims

1. Contact arrangement for push-in circuitbreakers (3) in switching installations, wherein connecting lugs (7, 11) are provided in the fixed installation part and at the circuitbreaker (3), the circuitbreaker (3) is pushed into a fixed position in a push-in carrier (1) and contact bridges (47) are provided for the electrically conductive connection of the fixed connecting lugs (7, 11) with those arranged at the circuitbreaker (3), wherein the contact bridges (47) are arranged in a contact frame (13), which is moved into the different operational settings of OFF, TEST and ON by way of a spindle drive (19) arranged fixedly in the push-in carrier (1) below the circuitbreaker (3) and wherein the circuitbreaker (3) in the operational settings of TEST and ON is constrainedly fixed in its place in the push-in carrier (1) and in the operational setting of OFF is withdrawable from the push-in carrier (1) and removable therefrom, characterised thereby, that the contact frame (13) consists of a displaceable contact frame part (63) and an exchange frame part (65) which is releasably connected therewith and in which the contact bridges (47) are arranged, wherein for the separation of the exchange frame part (65) from the contact frame part (63) without switching off of the voltage in the push-in carrier (1) a frame carrier (67) is pushable into the push-in carrier (1) in place of the circuitbreaker (3) and fixable in the pushed-in position and is firmly couplable with the exchange frame part (65) and, after release of this from the contact frame part (63), is withdrawable together with this from the push-in carrier (1) and removable therefrom.

2. Contact arrangement according to claim 1, characterised thereby that the frame carrier (67), which is movable into the push-in carrier (1) on slide tracks, has at both longitudinal sides a respective pivotable rod-shaped coupling lever (71, 72) which has at its free ends (75, 77) locking tongues (79, 81) which project out of the frame carrier (67), are arranged at one side and are pivotable into coupling slots (83, 85) in the exchange frame part (65) for mechanically positive entrainment in the travel direction.

3. Contact arrangement according to claim 2, characterised thereby that the coupling levers (71, 72) are pivotable in a cross member (87) movable in the push-in direction and are fixedly mounted in the longitudinal direction.

4. Contact arrangement according to claim 3, characterised thereby that the movable cross member (87) comprises a spindle nut (89) for a spindle shaft (91) of a spindle drive and that the spindle shaft (91) is rotatably mounted in a fixed cross member (88) in the frame carrier (67).

5. Contact arrangement according to claim 4, characterised thereby that the spindle shaft (91) has at its free ends (93) a shaped piece (95) for shape-locking reception of a handcrank or of another hand tool.

6. Contact arrangement according to one of the preceding claims, characterised thereby that the frame carrier (67) comprises guide slots (97) for guide pins at the movable cross member (87).

7. Contact arrangement according to one of the preceding claims, characterised thereby that the frame carrier (67) has projecting separating webs (99), which are constructed to be rectangular in cross-section and on which the mutually opposite, spring-loaded contact bridges (47) bear.

8. Contact arrangement according to claim 7, characterised thereby that the separating webs (99) have at their free ends (101) mounting wedges (103) which facilitate the introduction of the separating webs (99) into the intermediate space between the mutually opposite contact bridges (47).

9. Contact arrangement according to claim 8, characterised thereby that the mounting wedges (103) are firmly connectible with the separating webs (99) by means of bolts (105).

10. Contact arrangement according to claim 9, characterised thereby that the mutually facing end surfaces (107, 109) of the separating webs (99) and the mounting wedges (103) have mutually aligned threaded bores (111, 113) into which the bolts (105) can be screwed.

11. Contact arrangement according to one of the preceding claims, characterised thereby that the mounting wedges (103) and/or the separating webs (99) consist of a synthetic material, for example of a polyester.

12. Contact arrangement according to one of the preceding claims, characterised thereby that the contact frame part (63) consists of two cross members (115), which are mounted on two guide pins (33, 35) in the push-in carrier (1) to be secure against tilting and displaceable in common parallelly to one another by way of drive lever (15) loadable by the spindle shaft (19).

13. Contact arrangement according to claim 12, characterised thereby that the drive lever (15) is constructed as a plate (53), which is mounted on the fixed pivot (45) and is fixed in its place in the push-in carrier (1) by way of drive-in slots (55, 57) and pins (59, 61) simultaneously with the displacement of the contact frame (13) at the circuitbreaker (3) into the operational settings of TEST and ON.

14. Contact arrangement according to one of the preceding claims, characterised thereby that the exchange carrier frame (65) consists of a contact bridge carrier (119) which has at both transverse sides a respective cross member (121) fastened by means of clamping pins (123, 125), and that the cross members (121) are connected with the displaceable cross members (115) of the contact frame part (63) by means of releasable screw connections, wherein the cross members (121) can be centred relative to one another by means of centring pins (124, 126).

15. Contact arrangement according to one of the preceding claims, characterised thereby that the screws (135, 137, 139, 141) screwable into the threaded bores (127, 129, 131, 133) of the cross members (115) of the contact frame part (63) are provided at the free ends (143) of their bolts (145) with a threaded part (147) and that the bolts (145) have, between the screw head (149) and the threaded part (147), a threadless shank part (151) with an outer diameter reduced relative to the threaded part (147) in such a manner that the bolts (145) after screwing-through of their threaded parts (147) from threaded bores (153) into the cross members (121) are captively mounted in the cross members (121) of the exchange frame part (65) to be displaceable.

16. Method for the exchange of the contact system for a contact arrangement without switching-off of the switching installation, according to one of the preceding claims, characterised by the following method steps:
- Moving of the contact frame (13) into the operational setting of OFF, wherein the circuitbreaker (3) is unlatched in its fixed setting in the push-in carrier (1),
- Withdrawal of thecircuitbreaker (3) from the push-in carrier (1) into the standby setting by means of slide tracks and removal of the circuitbreaker (3),
- Insertion and pushing-in of the frame carrier (67) into the separating setting (operational setting OFF) of the contact frame (13),
- Movement of the contact frame (13) by way of the spindle shaft (19) in the push-in carrier (1) with the aid of a handcrank from the separating setting into the operational setting of ON,
- Connection of the frame carrier (67) with the exchange frame part (65) by means of the coupling lock (71, 72),
- Release of the connection of the exchange frame part (65) from the contact frame part (63) through release of the captive screws (135, 137, 139, 141),
- Drawing up of the exchange frame part (65) onto the frame carrier (67) by way of the spindle (91) in the frame carrier (67) with the aid of a handcrank,
- Driving of the contact frame part (63) into the operational setting of OFF, wherein the frame carrier (67) is unlatched, and
- Withdrawal of the frame carrier (67) together with the exchange frame part (65) into the standby setting and removal thereof from the slide tracks.

17. Method according to claim 16, characterised thereby that the exchange frame part (61) is driven by means of a handcrank by way of the spindle shaft (91) in the frame carrier (67) for the purpose of checking of the contact bridges (47).

## Revendications

1. Agencement de contact pour disjoncteurs enfichables (3) placés dans des postes de commutation, dans lequel sont prévues des bornes (7, 11) dans la partie fixe du système et sur le disjoncteur (3), le disjoncteur (3) est inséré dans un berceau (1) dans une position fixe et dans lequel sont prévus des ponts de contact (47) pour établir la connexion électrique entre les bornes (7, 11) fixes et celles disposées sur le disjoncteur (3), les ponts de contact (47) étant disposés dans un bâti de contact (13), lequel est commuté vers les positions de fonctionnement HORS TENSION, TEST et SOUS TENSION par l'intermédiaire d'une broche d'entraînement (19) fixée à demeure dans le berceau (1) au-dessous du disjoncteur (3) et où le disjoncteur (3) est maintenu par force à son emplacement dans le berceau lorsqu'il se trouve dans les positions de fonctionnement TEST et SOUS TENSION alors qu'il peut être sorti du berceau (1) et déposé lorsqu'il est en position de fonctionnement HORS TENSION, caractérisé en ce que le bâti de contact (13) se compose d'une partie de contact mobile (63) et d'une partie de bâti interchangeable (65) reliée à cette dernière de façon détachable et dans laquelle sont disposés les ponts de contact (47), où pour déconnecter la partie interchangeable du bâti (65) de la partie de contact du bâti (63) sans couper la tension dans le berceau (1), un support de bâti (67) peut être inséré dans le berceau (1) à la place du disjoncteur (3) et fixé dans sa position d'insertion, ce support de bâti pouvant être accouplé à demeure à la partie interchangeable du bâti (65) et, après que cette dernière a été séparée de la partie de contact du bâti (63), le support pouvant être extrait et séparé du berceau (1) conjointement avec ladite partie de contact.

2. Agencement de contact selon la revendication 1, caractérisé en ce que le support de bâti (67), qui peut être inséré dans le berceau (1) par guidage sur des glissières, présente sur ses deux côtés longitudinaux respectivement un levier d'accouplement articulé (71, 72) en forme de tige, ces leviers présentant respectivement à leur extrémité libre (75, 77) des languettes de verrouillage (79, 81) fixées unilatéralement et dépassant hors du support de bâti (67), lesquelles peuvent pivoter dans le sens d'insertion dans des rainures d'accouplement (83, 85) ménagées dans la partie interchangeable du bâti (65) de manière à réaliser un entraînement à coopération de formes.

3. Agencement de contact selon la revendication 2, caractérisé en ce que les leviers d'accouplement (71, 72) sont montés en pivotement dans une traverse (87) mobile dans le sens d'insertion, et sont montés de manière fixe dans le sens longitudinal.

4. Agencement de contact selon la revendication 3, caractérisé en ce que la traverse mobile (87) présente un écrou de broche (89) pour la broche (19) d'un entraînement à broche et en ce que cette broche (19) est montée en rotation dans une traverse fixe (88) dans le support de bâti (67).

5. Agencement de contact selon la revendication 4, caractérisé en ce que l'extrémité libre (93) de la broche (19) présente un embout en forme (95) pour recevoir en coopération de formes une manivelle ou un autre outil.

6. Agencement de contact selon l'une des revendications précédentes, caractérisé en ce que le support de bâti (67) présente sur la traverse mobile (87) des rainures de guidage (97) pour des tiges de guidage.

7. Agencement de contact selon l'une des revendications précédentes, caractérisé en ce que le support de bâti (67) présente des barrettes séparatrices (99) en saillie, de section rectangulaire, sur lesquelles reposent les ponts de contact à ressorts (47) disposés face à face.

8. Agencement de contact selon la revendication 7, caractérisé en ce que les extrémités libres (101) des barrettes séparatrices (99) présentent des coins de montage (103) qui facilitent l'introduction de ces barrettes séparatrices (99) dans l'intervalle entre les ponts de contact (47) disposés face à face.

9. Agencement de contact selon la revendication 8, caractérisé en ce que les coins de montage (103) peuvent être fixés à demeure aux barrettes séparatrices (99) au moyen de boulons (105).

10. Agencement de contact selon la revendication 9, caractérisé en ce que les faces en vis-à-vis (107, 109) des barrettes séparatrices (99) et des coins de montage (103) présentent des perçages taraudés (111, 113) alignés les uns par rapport aux autres, dans lesquels les boulons filetés peuvent être vissés (105).

11. Agencement de contact selon l'une des revendications précédentes, caractérisé en ce que les coins de montage (103) et/ou les barrettes séparatrices (99) sont en matière plastique, par exemple en polyester.

12. Agencement de contact selon l'une des revendications précédentes, caractérisé en ce que la partie de contact du bâti (63) se compose de deux traverses (115) qui sont conjointement guidées en translation dans le berceau (1), sans blocage et parallèlement l'une à l'autre, sur deux broches-guides (33, 35), sous l'action de leviers de commande (15) attaqués par la broche d'entraînement (19).

13. Agencement de contact selon la revendication 12, caractérisé en ce que le levier de commande (15) a la forme d'une plaque (53), qui est montée sur le pivot fixe (45), et pendant le déplacement du bâti de contact (13), maintient le disjoncteur (3) se trouvant en position de fonctionnement TEST et SOUS TENSION à sa place dans le berceau (1), par l'intermédiaire de rainures de guidage (55, 57) et de tourillons (59, 61).

14. Agencement de contact selon l'une des revendications précédentes, caractérisé en ce que la partie interchangeable du bâti (65) se compose d'un support de ponts de contact (119) qui présente sur chacun de ses deux côtés transversaux une traverse (121) fixée au moyen de goupilles de serrage (123, 125) et en ce que ces traverses (121) sont reliées aux traverses coulissantes (115) de la partie de contact (63) du bâti au moyen de liaisons vissées démontables, ces traverses (121) pouvant être centrées mutuellement au moyen de goupilles de centrage (124, 126).

15. Agencement de contact selon l'une des revendications précédentes, caractérisé en ce que les perçages taraudés (127, 129, 131, 133) des traverses (115) de la partie de contact du bâti (63) reçoivent des boulons à visser (135, 137, 139, 141) dont le corps de boulon (145) comprend une partie filetée (147) à son extrémité libre (143), et en ce que ces corps de boulons (145) présentent entre leur tête (149) et leur partie filetée (147) une partie lisse (151) de diamètre extérieur plus petit que celui de la partie filetée (147) de telle manière que les corps de boulons (145), après serrage de leurs parties filetées (147) dans les perçages taraudés (153) des traverses (121), sont montés en translation dans les traverses (121) de la partie interchangeable du bâti (65) de manière imperdable.

16. Procédé de remplacement du système de contact pour un agencement de contact sans déconnexion du poste de commutation selon l'une des revendications précédentes, caractérisé par les étapes suivantes :
- on amène en position HORS TENSION le bâti de contact (13) en déverrouillant le disjoncteur (3) de sa position fixe dans le berceau (1);
- on extrait le disjoncteur (3) du berceau (1) en le mettant en position de maintenance à l'aide des glissières et on le dépose (3) ;
- on met en place et on introduit le support de bâti (67) jusque dans la position de coupure (position de fonctionnement HORS TENSION) du bâti de contact (13);
- à l'aide d'une manivelle, on déplace le bâti de contact (13) de la position de coupure à la position SOUS TENSION, par l'intermédiaire de la broche d'entraînement (19), dans le berceau (1);
- on relie le support de bâti (67) à la partie interchangeable du bâti (65) au moyen des verrous d'accouplement (71, 72);
- on défait la liaison de la partie interchangeable (65) et de la partie de contact du bâti (63) par desserrage des boulons imperdables (135, 137, 139, 141);
- on enfile la partie interchangeable du bâti (65) sur le support de bâti (67) par l'intermédiaire de la broche (19) du support de bâti (67) à l'aide d'une manivelle ;
- on amène en position HORS TENSION la partie de contact du bâti (63), avec déverrouillage du support de bâti (67); et
- on extrait et on met en position de maintenance le support de bâti (67) avec la partie interchangeable du bâti (65), et on dépose ceux-ci hors des glissières.

17. Procédé selon la revendication 16, caractérisé en ce que, afin de contrôler les ponts de contact (47), on déplace la partie interchangeable (65) du bâti au moyen d'une manivelle, par l'intermédiaire de la broche d'entraînement (19) dans le support de bâti (67).
